(19) **Europäisches Patentamt / European Patent Office / Office européen des brevets**

(11) **EP 1 755 083 A2**

(12) # EUROPÄISCHE PATENTANMELDUNG

(43) Veröffentlichungstag:
**21.02.2007 Patentblatt 2007/08**

(51) Int Cl.:
***G06T 7/00*** (2006.01)     ***G06K 9/62*** (2006.01)

(21) Anmeldenummer: **06117535.2**

(22) Anmeldetag: **20.07.2006**

<table>
<tr><td>

(84) Benannte Vertragsstaaten:<br>
**AT BE BG CH CY CZ DE DK EE ES FI FR GB GR HU IE IS IT LI LT LU LV MC NL PL PT RO SE SI SK TR**<br>
Benannte Erstreckungsstaaten:<br>
**AL BA HR MK YU**

(30) Priorität: **16.08.2005 DE 102005038603**

</td><td>

(71) Anmelder: **ROBERT BOSCH GMBH**<br>
**70442 Stuttgart (DE)**

(72) Erfinder:<br>
• **Simon, Stephan**<br>
  **31079, Sibbesse (DE)**<br>
• **Withopf, Daniel**<br>
  **31135, Hildesheim (DE)**

</td></tr>
</table>

(54) **Verfahren und Vorrichtung zur Verfolgung eines Objekts in einer Bildersequenz**

(57) Bei vielen Anwendungen ist es wünschenswert ein Objekt in einer Bildersequenz von zeitlich nacheinander aufgenommenen Bildern zu verfolgen, um z.B. dessen Trajektorie zu berechnen. Insbesondere bei Fahrerassistenzsystemen werden derartige Techniken eingesetzt, um sensorgestützt das Fahrerumfeld zu erfassen.

Die Erfindung betrifft ein Verfahren zur Verfolgung eines Objekts in einer Bildersequenz, wobei durch einen Objekt-Verfolger in einem zum Zeitpunkt t aufgenommenen Bild $B_t$ ein Objektfenster ermittelt wird, in dem sich das Objekt befindet oder am wahrscheinlichsten befindet, wobei Bilder der Bildersequenz in Integralbilder umgerechnet werden, wobei in dem Bild $B_t$ Suchfenster gebildet werden, wobei für jedes der Suchfenster eine Antwortmenge $A_t$ von Antworten $a_i$ der Anwendung eines i-ten Musters auf den Bildinhalt des jeweiligen Suchfensters berechnet wird und wobei durch Vergleich der Antwortmengen $A_t$ der Suchfenster in dem Bild $B_t$ mit einer Antwortmenge $A_{t-1}$ des Objektfensters in einem zum Zeitpunkt t-1 aufgenommenen Bild $B_{t-1}$ oder mit einer Antwortmenge $A_{t0}$ des Objektfensters in einem zum Startzeitpunkt $t_0$ aufgenommenen Bild $B_{t0}$ das Objekt verfolgt wird.

Fig. 3

**Beschreibung**

Stand der Technik

Bei vielen Anwendungen ist es wünschenswert, ein Objekt in einer Bildersequenz von zeitlich nacheinander aufgenommenen Bildern zu verfolgen, um z.B. dessen Trajektorie zu berechnen. Insbesondere bei Fahrerassistenzsystemen werden derartige Techniken eingesetzt, um sensorgestützt das Fahrerumfeld zu erfassen. Dabei werden im Umfeld des Fahrzeugs Objekte wie z.B. Bäume, Fußgänger, Fahrzeuge und Fahrbahnmarkierungen als solche erkannt bzw. verfolgt und die Ergebnisse zur Unterstützung des Fahrers verwendet.

Beispielsweise offenbart die Druckschrift DE 103 46 573 A1 eine Umfelderfassung mit Kompensation der Eigenbewegung für sicherheitskritische Anwendungen, wobei die Objektverfolgung durch die Einbeziehung von Bewegungsgrößen der Eigenbewegung des Fahrzeugs unterstützt wird.

Zur Objektverfolgung sind Verfahren bekannt, die auf der Korrelationsanalyse beruhen. Bei diesen Verfahren wird jedoch vorausgesetzt, dass sich ein Objekt im Kamerabild über die Zeit immer gleich abbildet, was in der Realität allerdings nicht unbedingt zutrifft. Zudem ist die Korrelationsanalyse sehr rechenauwändig. Ferner sind Verfahren bekannt, bei denen zunächst aus den Bildern Merkmale z.B. per Hand extrahiert werden, anhand derer dann eine Verfolgung des Objektes realisiert wird. Ein systematischer Ansatz zur Auswahl der Merkmale ist nicht gegeben.

Die Druckschrift US 2002/0102024 A1, Erfinder Paul Viola und Michael Jones, in der auf den Fachartikel: Rapid object detection using a boosted cascade of simple features. In Proc. IEEE Conf. Computer Vision Pattern Recognition. Cambridge, GB, 2001 ebenfalls von Viola und Jones verwiesen wird, offenbart ein extrem recheneffizientes Verfahren, welches es ermöglicht, Gesichter in Videobildern zu detektieren und dabei hohe Detektionsraten zu erreichen. Es wird ein Verfahren vorgestellt, wobei in einem ersten Schritt aus dem Videobild ein Integralbild erzeugt wird, eine automatische Auswahl von Mustern über einen Adaboost-Algorithmus erfolgt und die ausgewählten Muster kaskadierend auf das Integralbild angewandt werden.

Die Druckschrift US 2004/0258307 A1 als nächstkommender Stand der Technik offenbart die Anwendung des in der Druckschrift US 2002/0102024 A1 beschriebenen Verfahrens bei der Detektion eines Fußgängers in einer Bildersequenz. Hierbei ist vorgesehen, aufeinanderfolgende Bilder der Bildsequenz über Funktionen zu kombinieren und diese kombinierten Bilder mittels Muster- oder Merkmalsanalyse zu klassifizieren.

Vorteile der Erfindung

Das Verfahren gemäß Hauptanspruch 1 hat den Vorteil, dass die Verwendung eines Integralbildes sowie der einfache Vergleich von Antwortmengen zu einer massiven Verringerung des Rechenaufwands bei der Objektverfolgung in einer Bildersequenz z.B. gegenüber der Korrelationsanalyse führt bzw. eine recheneffiziente Alternative zu den bekannten Verfahren bildet.

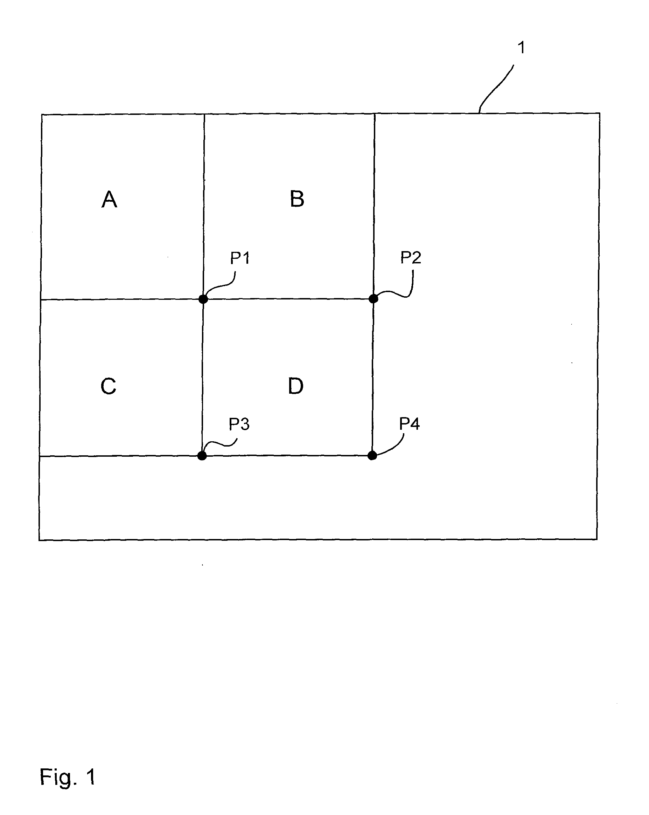

Die Erfindung betrifft ein Verfahren zur Objektverfolgung, also ein Verfahren oder die Anwendung eines Algorithmus, das bzw. der das Wiederfinden eines bekannten Objekts in Bildern einer Bildsequenz ermöglicht. In jedem Bild der Bildsequenz wird ein Objektfenster, also ein Teilbereich des Bildes, ermittelt, in dem sich das gesuchte Objekt befindet oder mit größter Aufenthaltswahrscheinlichkeit befindet. Bei dem Objekt handelt es sich vorzugsweise um das Abbild eines anderen Verkehrsteilnehmers, also z.B. eines anderen Fahrzeugs oder eines Fußgängers, oder um das Abbild eines stationären Verkehrsobjektes, wie z.B. eines Baums, eines Straßenschildes o.ä. Für das Verfahren wird z.B. mittels einer Kamera eine Bildsequenz zu Zeitpunkten ($t_0$, ...,t-1 , t...) aufgenommen, so dass eine Abfolge von zeitlich insbesondere äquidistant hintereinanderfolgenden Einzelbildern gebildet wird. Als Grundlage für eine recheneffiziente Objektverfolgung werden die Bilder der Bildsequenz in Integralbilder umgerechnet. Bei diesem Schritt kann entweder das gesamte jeweilige Bild in ein Integralbild transformiert werden oder nur ein selektierter Teil des Bildes. Zur Definition des Begriffs "Integralbild" wird auf die Druckschrift US 2002/0102024 A1, deren Inhalt via Referenzierung in die vorliegende Anmeldung integriert wird, sowie insbesondere auf die Beschreibung zu Figur 1 verwiesen.

Bei dem Verfahren werden in einem zum Zeitpunkt t aufgenommenen Bild $B_t$ eine oder mehrere Suchfenster festgelegt und/oder ein Suchfenster verschoben und/oder in der Größe verändert, in denen das Objekt gesucht werden soll. Für jedes der Suchfenster wird eine Antwortmenge $A_t$ von Antworten $a_i$ gebildet. Jede Antwort $a_i$ repräsentiert dabei einen Signifikanzwert für ein Muster $M_i$ welches auf das jeweilige Suchfenster angewendet wird. Die Antwortmenge $A_t$ kann allgemein wie folgt dargestellt werden: $A_t = \{a_i (t), i = 1,...,N\}$. Die derart berechneten Antwortmengen $A_t$ werden mit der Antwortmenge $A_{t-1}$ eines Objektfensters eines zu einem Zeitpunkt t-1 aufgenommenen Bildes $B_{t-1}$ verglichen, also einer Antwortmenge eines Teilbereichs des Bildes $B_{t-1}$ in dem sich das Objekt befand oder mit großer Wahrscheinlichkeit befand. Alternativ werden die Antwortmengen $A_t$ mit der Antwortmenge $A_{t0}$ des Objektfensters eines zu einem Startzeitpunkt $t_0$ aufgenommenen Bildes verglichen. Alternativ oder ergänzend kann vorgesehen sein, dass z.B. über eine Optimierungsroutine die Antwortmenge und/oder die Muster $M_i$ adaptiv über die Zeit angepasst wird bzw. werden.

Das Verfahren kann optional mehrmals auf die gleiche Bildersequenz angewendet werden, so dass vorzugsweise parallel mehrere Objekte in der Bildersequenz verfolgt werden können.

Durch die in den Unteransprüchen aufgeführten Maßnahmen sind vorteilhafte Weiterbildungen und Verbesserungen des im Hauptanspruch angegebenen Verfahrens möglich.

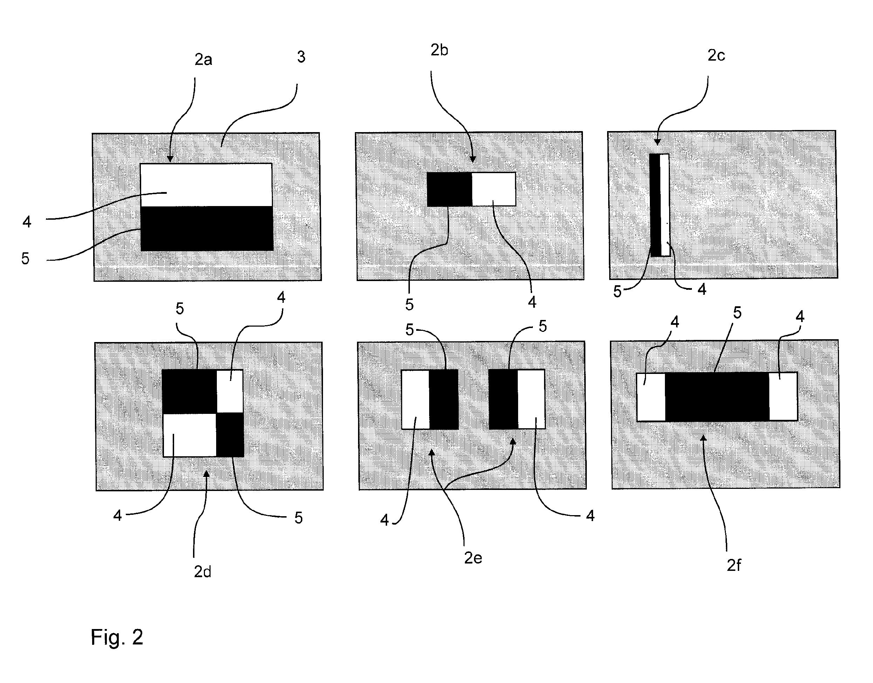

Es ist vorteilhaft, wenn das i-te Muster oder jedes Muster als zweidimensionale Verteilung von Werten $M_i(x,y)$ ausgebildet ist, wobei die Werte vorzugsweise einen ternären Wertebereich aufweisen. Für weitere Muster und insbesondere weitere Merkmale der Muster wird auf die Beschreibung zu Figur 2 verwiesen. Insbesondere kann vorgesehen sein, dass das Muster auf die Größe des Suchfensters und/oder Objektfensters skaliert wird und/oder das Bild derart skaliert wird, dass die Größe des Suchfensters und/oder Objektfensters an die Größe des Musters angepasst ist.

Es ist ferner vorteilhaft, wenn weitere Sensorinformationen zur Objektverfolgung herangezogen werden, insbesondere Daten von Fahrzeugsensorik, die über die Eigenbewegung des eigenen Fahrzeugs Auskunft geben (wie z.B. Geschwindigkeit, Gierrate, Nickrate). Eine derartige Kopplung von Objektverfolgung und Fahrzeugsensorik ist in der Patentanmeldung DE 103 46 573 A1 der Anmelderin beschrieben. Der gesamte Offenbarungsinhalt der genannten Anmeldung wird via Referenzierung in die vorliegende Anmeldung integriert. Ferner kann vorgesehen sein, Daten von Umfeldsensoren wie z.B. Radar-, Lidar, Ultraschallsensoren, Infrarotsensoren u.ä. mit der Objektverfolgung zu koppeln und/oder mit Daten von Umfeldsensoren im Sinne einer Datenfusion zu verrechnen, um die Ergebnisse der Objektverfolgung zu kontrollieren oder zu verifizieren, so dass die Verfügbarkeit und Zuverlässigkeit der Objektverfolgung erhöht wird.

Die Ausgestaltung einer Vorrichtung nach Anspruch 11 weist im wesentlichen die gleichen Vorteile wie das beanspruchte Verfahren auf. Insbesondere kann vorgesehen sein, dass die Vorrichtung in einer Parallelrechnerstruktur vorgesehen ist. Eine Recheneinheit ist dabei als Integer-Recheneinheit ausgebildet und übernimmt insbesondere die Berechnung der Integralbilder. Eine weitere Recheneinheit ist als Floating Point - Recheneinheit ausgebildet und übernimmt insbesondere die Berechnung der Merkmalswerte.

Weitere Einzelheiten, Merkmale, Merkmalskombinationen, Vorteile und Wirkungen auf der Basis der Erfmdung ergeben sich aus der nachfolgenden Beschreibung bevorzugter Ausführungsbeispiels der Erfindung und aus den Zeichnungen. Diese zeigen jeweils in schematischer Darstellung:

Figur 1 ein Grafik zur Illustration der Berechnung von Rechtecksummen mit Hilfe eines Integralbildes;

Figur 2 Ausführungsbeispiele von verschiedenen Mustern;

Figur 3 ein erstes Ausführungsbeispiel einer Vorrichtung zur Objektverfolgung;

Figur 4 ein zweites Ausführungsbeispiel einer Vorrichtung zur Objektverfolgung.

Die Figur 1 zeigt ein Integralbild 1 eines zu einem Zeitpunkt t aufgenommenen Bildes B mit der Werte- oder Intensitätsverteilung g(x,y,t). Die Werteverteilung des Integralbilds 1 G(x, y, t) ergibt sich aus dem Originalbild g(x,y,t) durch Integration gemäß der Formel

$$G(x,y,t) = \sum_{x'=1,\ldots,x} \sum_{y'=1,\ldots,y} g(x'y',t)$$

Die Verwendung eines Integralbilds 1 zeigt Vorteile, wenn Integrale über bestimmte Bereiche, insbesondere über rechteckige Bereiche, des Originalbildes B berechnet werden sollen, da das Integralbild 1 eine Matrix aus Integralwerten des Bildes B darstellt. Am Punkt P 1 der Figur 1 kann beispielsweise das Integral $G_{P1}$ über den Flächenbereich A des Originalbildes abgelesen werden. Am Punkt P4 kann das Integral $G_{P4}$ über die Flächen A, B, C und D entnommen werden. Das Integral über die Fläche D erhält man beispielsweise über eine einfache Berechnung: $D = G_{P4} - G_{P2} - G_{P3} + G_{P1}$. Unabhängig von der Größe der Fläche erfordert die Bestimmung des Integrals über einen rechteckigen, achsenparallelen Bereich also nur die Summation über vier Werte des Integralbildes.

Alternativ zu dieser Ausführungsform kann auch ein um einen beliebigen Winkel, insbesondere um 45°, gedrehtes Integralbild verwendet werden, wie es beispielsweise als RSAT (rotated summed area table) in dem Fachaufsatz Lienhart, R; Kuranov, A.; Pisarevsky, V.: Empirical analysis of detection cascades of boosted classifiers for rapid object detection. In: DAGM '03, 25th Pattern Recogonition Symposium, 2003, S. 297 - 304 beschrieben ist. Die Offenbarung dieses Artikels wird via Referenzierung in die vorliegende Anmeldung integriert.

Die Figur 2 zeigt verschiedene Muster M 2a, b, c, d, e, f in einem Detektionsfenster 3, die auf die Suchfenster und/oder Objektfenster eines Bildes B angewendet werden, um eine Antwort a zu erhalten.

Innerhalb des Detektionsfenster 3, welches jeweils als grauer Bereich dargestellt ist, ist jeweils ein Muster 2a, b, c, d, e, f vorgesehen. Die Muster 2a, b, c, d, e, f weisen jeweils weiße Rechtecke 4 und schwarze Rechtecke 5 auf und unterscheiden sich untereinander durch die Anzahl, Farbe, Verteilung, Abmessungen, Lage und Größe der Rechtecke. Während das Muster 2a nur jeweils ein schwarzes und ein weißes Rechteck 4, 5 zeigt, so weist beispielsweise das Muster 2e jeweils zwei weiße und zwei schwarze Bereiche 4, 5 innerhalb des Detektionsfensters 3 auf. Bei der Anwendung der Muster 2a, b, c, d, e, f, insbesondere samt Detektionsfenster 3 - nachfolgend auch zusammenfassend als Muster bezeichnet - auf ein Suchfenster und/oder Objektfenster werden Muster und Bild B übereinandergelegt und die Werte (Intensitätswerte) des überlappenden Bereichs des Bildes B wie folgt gewichtet aufsummiert: Bereiche des Bildes B, die mit den grauen Bereichen des Detektionsfensters 3 überlappen, werden nicht berücksichtigt, was einer Wichtung mit dem Faktor 0 entspricht. Bereiche des Bildes B, die mit weißen Bereichen 4 des Musters überlappen, werden mit negativen Vorzeichen aufsummiert, Bereiche des Bildes B, die mit schwarzen Bereichen 5 des Musters überlappen, werden mit positiven Vorzeichen aufsummiert. Die gewichtete Gesamtsumme des überlappenden Bereichs stellt die Antwort a auf das Muster M dar. Die Berechnung der Antwort a, insbesondere der gewichteten Integrale, kann dabei in recheneffizienter Weise über die Verwendung des Integralbilds erfolgen.

Ein Muster kann beispielsweise als "Bild" aufgefasst werden, das einen ternären (dreiwertigen) Wertebereich hat (*Werte* $\in \{-1,0,1\}$ ohne Beschränkung der Allgemeinheit) und bei dem die Flächen konstanten Wertes rechteckig sind oder in rechteckige Bereiche zerlegt werden können. Besonders effizient d.h. mit besonders wenigen Zugriffen auf das Integralbild, lässt sich das Muster auf ein Bild B anwenden, wenn die Anzahl der schwarzen und weißen Rechtecke klein ist, vorzugsweise jeweils kleiner gleich drei, insbesondere jeweils kleiner gleich zwei Rechtecke.

In einer vorteilhaften Ausgestaltung umfasst der Wertebereich für das Muster mehr Werte, so dass beispielsweise ganzzahlige Werte zwischen -2 und 2 verwendet werden und fünf verschiedene Wichtungs-Bereiche innerhalb des Musters aufgespannt werden. Auch die Verwendung von skalaren oder gebrochen rationalen Werten als Wertebereich kann angewendet werden und ist beispielsweise von Vorteil, wenn ein Muster wie z.B. Muster 2f in der Summe den Wert 0 ergeben soll.

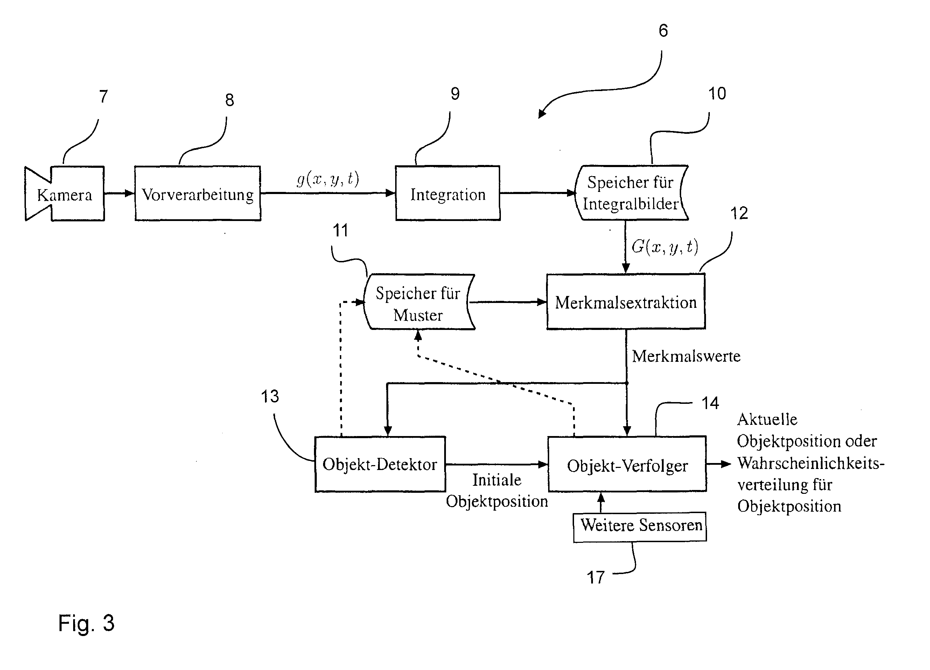

Die Figur 3 zeigt ein erstes Ausführungsbeispiel einer Vorrichtung 6 zur Objektverfolgung in einem schematischen Blockschaltbild. Die Vorrichtung 6 umfasst eine Kamera 7 zur Aufnahme der Bildersequenz, welche beispielsweise als CCD-, CMOS- oder Infrarot-Kamera, die insbesondere sensitiv im nahen Infrarot und/oder fernen Infrarot ist, ausgebildet ist. Der von der Kamera 7 empfangene Bilddatenstrom wird optional in einem Vorverarbeitungsmodul 8 zunächst vorverarbeitet (z.B. Fixed-Pattem Noise Unterdrückung, Bildentrauschung, geometrische Verzeichnungskorrektur, radiometrische Korrektur, lineare oder nicht-lineare Filterung, Beleuchtungskorrektur). In einem nachgeschalteten Integrationsmodul 9 werden die Bilder der Bildersequenz in Integralbilder umgerechnet und in einen Integralbildspeicher 10 abgelegt.

Ferner ist in der Vorrichtung 6 ein Musterspeicher 11 vorgesehen, der zur Speicherung von Mustern in der Art der Muster in Figur 2 dient. Vorzugsweise werden die Muster nicht als Bilder gespeichert, sondern speicherplatzsparend über die Koordinaten der Eckpunkte der Rechtecke und die zu verwendenden Vorzeichen und Vorfaktoren, wie sie auf das Intergralbild 1 (Fig. 1) angewendet werden. Ein Merkmalsextraktionsmodul 12 ist mit dem Integralbildspeicher 10 und dem Musterspeicher 11 derart verschaltet, dass es auf beide Speicher zugreifen kann. In dem Merkmalsextraktionsmodul 12 wird die Merkmalsextraktion durchgeführt, wobei die Antworten der einzelnen Muster aus dem Musterspeicher 11 auf die Einzelbilder der Bildersequenz, insbesondere auf Objekt- und/oder Suchfenster in den Einzelbilder, unter Verwendung der Integralbilder aus dem Integralbildspeicher 10 berechnet werden. Diese Antworten sind in der Figur 3 als Merkmalswerte bezeichnet.

Die Vorrichtung 6 umfasst weiterhin einen Objekt-Detektor 13, der ein erstmalig im Bild erscheinendes Objekt detektiert und eine initiale Objektposition, z.B. in Form eines das Objekt umschreibenden Rechtecks - auch Objektfenster genannt - berechnet und bereitstellt. Diese initiale Objektposition und/oder die Merkmalswerte des Objekts werden dann an einen Objekt-Verfolger 14 übergeben, der in den nachfolgenden Bildern der Bildsequenz das einmal detektierte Objekt wiederfindet wie nachfolgend noch detailliert beschrieben wird. Als Ergebnis liefert der Objekt-Verfolger 14 die aktuelle Objektposition und/oder die Wahrscheinlichkeitsverteilung für die Objektposition in einem oder allen der nachfolgenden Bilder.

In dem Musterspeicher 11 sind eine Auswahl von besonders geeigneten Mustern für Merkmale aus einer Merkmalsmenge, die mit Hilfe der Muster gebildet sind, abgespeichert. Die Auswahl der Merkmale erfolgt vorzugsweise im Vorfeld vor der Objekt-Detektion über ein Lernverfahren mit Trainingsdaten wie z.B. den Adaboost-Algorithmus und dessen Varianten (zur Erläuterung des Algorithmus wird auf die in der Einleitung zitierte Druckschrift und den Fachartikel von Viola und Jones verwiesen). Alternativ können die Muster auch während des Betriebs von dem Objekt-Detektor 13 und/oder Objekt-Verfolger 14 im Musterspeicher 11 abgelegt werden, was durch die gestrichelten Linien angedeutet ist. Insbesondere kann der Objekt-Detektor 13 und/oder Objekt-Verfolger 14 die Muster liefern, anpassen und/oder aus einem vorgegebenen Satz von Mustern auswählen.

Bei einer bevorzugten Ausführungsalternative erhalten der Objekt-Detektor 13 und der Objekt-Verfolger 14 die gleiche Menge an Merkmalswerten (Antworten) aus dem Merkmalsextraktionsmodul 12 und/oder können auf die gleichen Merkmalswerte in einem dem Merkmalsextraktionsmodul 12 zugeordneten Speicher (nicht dargestellt) zugreifen. Durch diese Maßnahme/Architektur der Datendistribution wird ein Synergieeffekt erzielt, so dass der Rechenaufwand insgesamt gering gehalten wird, da die Merkmalsextraktion nur einmal für beide Module stattfinden muss.

Die Vorverarbeitung und die Bildung des Integralbilds arbeiten im allgemeinen auf dem Bilddatenstrom (benötigen also nicht zwingenderweise die Speicherung des vollen Bildes) und sind sehr gut in Hardware darstellbar, so dass Vorverarbeitungsmodul 8 und/oder Integrationsmodul 9 vorzugsweise als FPGA (Field Programmable Gate Array) ausgebildet sind. Die Berechnung des Integralbilds benötigt nämlich nur Integer-Arithmetik und kann mit geringem Aufwand auf dem FPGA durchgeführt werden und in einem als SDRAM ausgebildeten Integralbildspeicher 10 abgelegt werden. Objekt-Detektor 13 und/oder Objekt-Verfolger 14 sind dagegen vorzugsweise als programmierbarer Prozessor, z.B. einem Power-PC-Prozessor (MGT 5200), ausgebildet. Der Prozessor kann auf das in dem SDRAM abgelegte Integralbild zugreifen und Antworten auf die auf das Bild angewendeten Muster in sehr effizienter Weise bestimmen. Die Erfindung kann beispielsweise auf einem Steuergerät für Fahrzeugassistenzsysteme heutiger Architektur (z.B. Bosch IVS Video-Steuergerät) umgesetzt werden.

Im nachfolgenden wird die Funktionsweise des Objekt-Verfolgers 14 detailliert beschrieben.

In der Initialisierungsphase wird die vom Objekt-Detektor 13 z.B. in Form eines Objektfensters gelieferte initiale Objektposition verarbeitet. Innerhalb des Objektfensters werden Antworten von Mustern auf den Bildinhalt bestimmt oder bei dem Merkmalsextraktionsmodul abgefragt. Eine solche Antwort ist allgemein beschrieben durch

$$a_i(t) = \sum_{x'=x_l,\ldots,x_r} \sum_{y'=y_0,\ldots,y_u} g(x',y',t) \cdot M_i(x'-x_l, y'-y_0)$$

mit:

$x_l, x_r, y_o, y_u$      Eckkoordinaten des Suchfensters
$M_i(x', y')$      i-tes auf die Suchfenstergröße skalierte Muster
$g(x',y',t)$      Grauwerte des Bildes zum Zeitpunkt t an der Bildposition $(x', y')$

Die Signifikanz des Musters $a_i$ ist umso höher, je größer der Betrag der Antwort $a_i(t)$ im Vergleich zu anderen Mustern ist, wobei ein positiv signifikantes Muster dem Objekt ähnlich sieht und ein negativ signifikantes Muster dem Negativbild des Objekts ähnlich sieht.

Aus Effizienzgründen kann vorgesehen sein, dass für die Verfolgung des Objekts nur eine Untermenge aller möglichen Muster verwendet wird. Die Auswahl der Muster kann vorab offline anhand von Trainingsdaten oder online anhand der relativen Signifikanzen getroffen werden. Die Auswahl dieser Muster und ihre Antworten merkt sich der Objekt-Verfolger 14. Damit ist die Initialisierungsphase abgeschlossen.

In der Verfolgungsphase werden die in der Initialisierungsphase als signifikant oder vorab offline ausgewählten Muster gemäß der oben genannten Gleichung auf ein nachfolgendes Bild, insbesondere auf ein oder mehrere Suchfenster in dem nachfolgenden Bild, angewendet und die resultierenden Antworten mit den Antworten des vorhergehenden Bildes verglichen. Es werden also die Antworten $a_i(t)$ mit den Antworten $a_i(t-1)$ verglichen, wobei t-1 einen Zeitpunkt bezeichnet, der vor dem Zeitpunkt t liegt.

Dabei wird ein Suchfenster in dem nachfolgenden Bild verschoben und/oder in der Größe variiert und die Muster auf dieses oder diese Suchfenster angewendet. Das Verschieben des Suchfensters berücksichtigt die mögliche Positionsänderung des Objekts innerhalb eines Bildes, die Größenänderung des Suchfensters berücksichtigt die mögliche Größenänderung des Objekts, z.B. aufgrund einer Veränderung der Entfernung zwischen dem realen Objekt und der Kamera 7 der Vorrichtung 6.

Der Vergleich der Antworten $a_i(t)$ und $a_i(t-1)$ auf ein Muster i und/oder der Antwortmengen $A_t = \{a_i(t), i=1,\ldots,N\}$ und $A_{t-1} = \{a_i(t-1), i=1,\ldots,N\}$ auf i Muster $M_i$ zwischen Objektfenster und den verschiedenen Suchfenstern kann hierbei durch einfache Differenzbildung und/oder einfache Differenzbildung und Anwendung einer Funktion auf die Differenz, z.B. Absolutwert oder Quadrat oder eine andere Funktion, insbesondere mit einfacher oder gewichteter Summation, geschehen oder aber durch ein Lernverfahren, neuronales Netz, Fuzzy Logic o.ä.

Das Ergebnis der Verfolgungsphase ist vorzugsweise eine Wahrscheinlichkeitsverteilung, die für jede Position und/oder Objektgröße bzw. dem zugeordneten Suchfenster im nachfolgenden Bild eine Wahrscheinlichkeit angibt, mit der sich das Objekt an der jeweiligen Stelle befindet. Alternativ wird nur die Suchposition mit der besten Übereinstimmung als Objektposition ausgegeben. Vorzugsweise wird diese Objektposition oder die wahrscheinlichste Objektposition und deren Antworten (Merkmalswerte) für ein weiteres nachfolgendes Bild als Vergleichsposition gewählt. Falls keine der Suchpositionen zu einer guten Übereinstimmung führt, kann das Objekt verworfen werden. Alternativ wird der Versuch der Verfolgung zunächst in nachfolgenden Bildern fortgesetzt, mit der Begründung, dass Objekte auch zeitweise verdeckt sein können. Erst wenn nach einer definierten Anzahl von Bildern und/oder einer bestimmten Zeitspanne das Objekt nicht detektiert wird, wird es verworfen.

Es kann vorteilhaft sein, wenn - wie bereits weiter oben angesprochen - während der Objektverfolgung die in der Initialisierungsphase gespeicherte Auswahl der Muster und/oder Merkmalsantworten aktualisiert wird. Dies ist insbesondere vorteilhaft, wenn sich die Betrachtungsperspektive geändert hat (z.B. Überholen des verfolgten Objekts) oder wenn sich die Beleuchtungssituation ändert (z.B. Tunneleinfahrt oder -ausfahrt). Die Erkennung der Situationsveränderung erfolgt vorzugsweise automatisch.

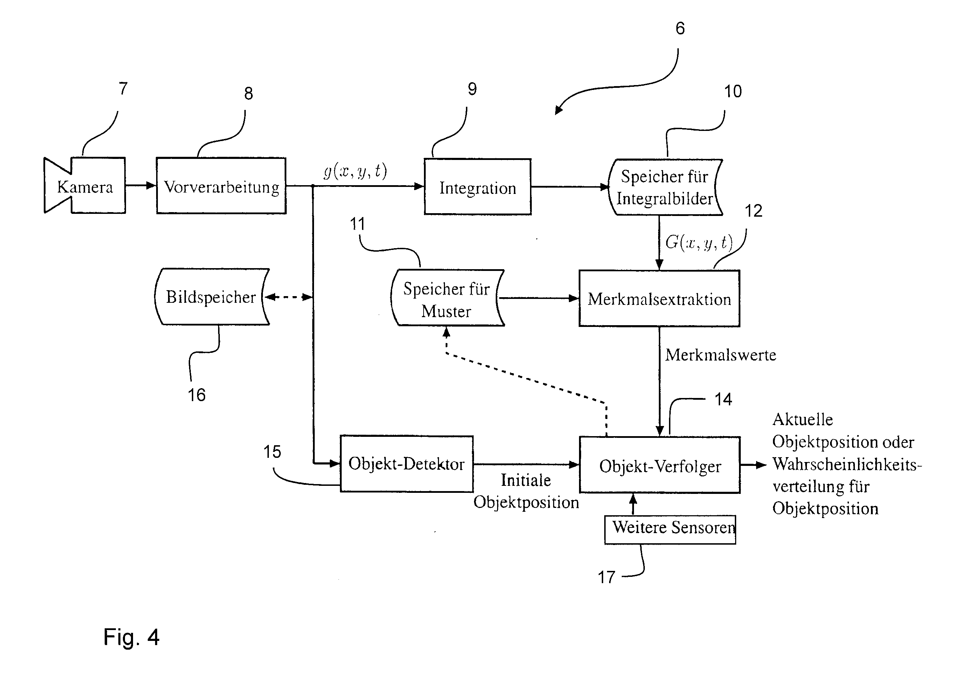

In der Figur 4 ist ein zweites Ausführungsbeispiel einer Vorrichtung zur Objektverfolgung in Form eines schematischen Blockdiagramms gezeigt. Die Vorrichtung in Figur 4 unterscheidet sich im wesentlichen von der Vorrichtung in der Figur 3 dadurch, dass der Objekt-Verfolger 15 in Figur 4 anders verschaltet ist und eine andere Funktionsweise zeigt als der Objekt-Detektor 13 in Figur 3. Der Objekt-Detektor 15 in Figur 4 verwendet ein beliebiges, bekanntes Prinzip, um Objekte zu detektieren und eine initiale Objektposition zu bestimmen. Beispielsweise verwendet der Objekt-Detektor 15 Unterschiede im optischen Fluss zwischen Vorder- und Hintergrund, um Objekte im Vordergrund zu detektieren. Da der Objekt-Detektor 15 für dieses Verfahren mindestens ein Vorgängerbild verfügbar haben muss, ist bei der Vorrichtung in Figur 4 ein optionaler Bildspeicher 16 vorgesehen. Nach Übergabe der initialen Objektposition an den Objekt-Verfolger 14 arbeitet die Vorrichtung in Figur 4 analog zu der Vorrichtung in Figur 3.

**Patentansprüche**

1. Verfahren zur Verfolgung eines Objekts in einer Bildersequenz, wobei durch einen Objekt-Verfolger in einem zum Zeitpunkt t aufgenommenen Bild $B_t$ ein Objektfenster ermittelt wird, in dem sich das Objekt befindet oder am wahrscheinlichsten befindet,

   wobei Bilder der Bildersequenz in Integralbilder umgerechnet werden, wobei in dem Bild $B_t$ Suchfenster gebildet werden, wobei für jedes der Suchfenster eine Antwortmenge $A_t$ von Antworten $a_i$ der Anwendung eines i-ten Musters auf den Bildinhalt des jeweiligen Suchfensters berechnet wird und wobei durch Vergleich der Antwortmengen $A_t$ der Suchfenster in dem Bild $B_t$ mit einer Antwortmenge $A_{t-1}$ des Objektfensters in einem zum Zeitpunkt t-1 aufgenommenen Bild $B_{t-1}$ oder mit einer Antwortmenge $A_{t0}$ des Objektfensters in einem zum Startzeitpunkt $t_0$ aufgenommenen Bild $B_{t0}$ das Objekt verfolgt wird.

2. Verfahren nach Anspruch 1, **dadurch gekennzeichnet, dass** das i-te Muster $M_i(x,y)$ als zweidimensionale Verteilung von Werten ausgebildet ist, wobei die Werte vorzugsweise einen ternären Wertebereich aufweisen und wobei bei der Verteilung von Werten die Flächen konstanten Wertes rechteckig sind oder in rechteckige Bereiche zerlegt werden können.

3. Verfahren nach Anspruch 1 oder 2, **dadurch gekennzeichnet, dass** eine Antwort $a_i$ zum Zeitpunkt t unter Verwendung des Integralbildes gebildet wird, indem das insbesondere auf die Größe des Suchfensters skalierte Muster i auf das Suchfenster wie folgt angewandt wird:

$$a_i(t) = \sum_{x'=x_l,...,x_r} \sum_{y'=y_o,...,y_u} g(x',y',t) \cdot M_i(x'-x_l, y'-y_0)$$

mit:

   $x_l, x_r, y_o, y_u$ Eckkoordinaten des Suchfensters
   $M_i(x', y')$ i-tes auf die Suchfenstergröße skalierte Muster
   $g(x',y',t)$ Werte des Bildes zum Zeitpunkt t an der Bildposition $(x', y')$

4. Verfahren nach einem der vorhergehenden Ansprüche, **dadurch gekennzeichnet, dass** die Suchfenster unterschiedliche Positionen in dem Bild $B_t$ und/oder unterschiedlichen Größen aufweisen und/oder dass der Vergleich durch Differenzbildung und/oder mit trainierten Lernverfahren erfolgt.

5. Verfahren nach einem der vorhergehenden Ansprüche, **dadurch gekennzeichnet, dass** als Ergebnis des Vergleichs eine Wahrscheinlichkeitsverteilung ermittelt wird, die für jede Position und/oder Objektgröße im Bild zum Zeitpunkt t eine Aufenthaltswahrscheinlichkeit für das Objekt angibt und/oder die Position des Objektfensters zum Zeitpunkt t ermittelt wird.

6. Verfahren nach einem der vorhergehenden Ansprüche, **dadurch gekennzeichnet, dass** weitere Sensorinformationen zur Objektverfolgung herangezogen werden, insbesondere Daten der Fahrzeugsensorik und/oder von weiteren Umfeldsensoren.

7. Verfahren nach einem der vorhergehenden Ansprüche, **dadurch gekennzeichnet, dass** in einer Initialisierungsphase zu dem Startzeitpunkt $t_0$ ein Objektfenster, insbesondere Größe und Position des Objektfensters, in dem sich das Objekt zu einem Zeitpunkt $t_0$ befindet, von einem Objekt-Detektor an den Objekt-Verfolger übergeben wird.

8. Verfahren nach einem der vorhergehenden Ansprüche, **dadurch gekennzeichnet, dass** die Auswahl der i Muster aus einer Mustermenge offline vorab mit Hilfe von Trainingsdaten und/oder online durch den Objekt-Detektor und/oder den Objekt-Verfolger erfolgt.

9. Verfahren nach Anspruch 8, **dadurch gekennzeichnet, dass** die Auswahl der i Muster über Lernverfahren, insbesondere dem ADABOOST-Algorithmus erfolgt.

10. Verfahren nach einem der vorhergehenden Ansprüche, **dadurch gekennzeichnet, dass** der Objekt-Detektor und der Objekt-Verfolger die gleichen Muster verwenden und/oder auf die gleichen Antwortmengen zugreifen.

11. Vorrichtung (6) zur Verfolgung eines Objekts in einer Bildsequenz, **dadurch gekennzeichnet, dass** die Vorrichtung (6) schaltungstechnisch und/oder programmtechnisch zur Durchführung des Verfahrens nach einem der Ansprüche 1 bis 10 ausgebildet ist.

12. Vorrichtung (6) nach Anspruch 11, **dadurch gekennzeichnet, dass** ein Integrationsmodul (9) zur Berechnung der Integralbilder vorgesehen, das als FPGA realisiert ist und/oder dass der Objekt-Detektor (13) und/oder der Objekt-Verfolger (14) als programmierbarer Prozessor ausgebildet ist.

13. Vorrichtung (6) nach Anspruch 11 oder 12, **dadurch gekennzeichnet, dass** die Vorrichtung (6) mit der Fahrzeugsensorik (17) verschaltbar ist, derart, dass Daten der Fahrzeugsensorik (17) an die Vorrichtung (6) übergebbar sind.

1

| A | B | |
|---|---|---|
| C | D | |

P1    P2

P3    P4

Fig. 1

Fig. 2

Fig. 3

Fig. 4

**EP 1 755 083 A2**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 10346573 A1
- US 20020102024 A1
- US 20040258307 A1

### In der Beschreibung aufgeführte Nicht-Patentliteratur

- Fachartikel: Rapid object detection using a boosted cascade of simple features. **PAUL VIOLA ; MICHAEL JONES.** Proc. IEEE Conf. Computiter Vision Pattern Recognition. Cambridge, 2001

- **LIENHART, R ; KURANOV, A. ; PISAREVSKY, V.** Empirical analysis of detection cascades of boosted classifiers for rapid object detection. *DAGM '03, 25th Pattern Recogonition Symposium,* 2003, 297-304